(19) Europäisches Patentamt
European Patent Office
Office européen des brevets

(11) **EP 2 419 782 B1**

(12) **FASCICULE DE BREVET EUROPEEN**

(45) Date de publication et mention de la délivrance du brevet:
**06.04.2016 Bulletin 2016/14**

(21) Numéro de dépôt: **10723661.4**

(22) Date de dépôt: **12.04.2010**

(51) Int Cl.:
**G02C 7/06** (2006.01)

(86) Numéro de dépôt international:
**PCT/FR2010/050707**

(87) Numéro de publication internationale:
**WO 2010/119218 (21.10.2010 Gazette 2010/42)**

(54) **REALISATION D'UN VERRE DE LUNETTES PERSONNALISE EN FONCTION D'UNE PERCEPTION DE FLOU**

HERSTELLEN VON INDIVIDUELLEM BRILLENGLAS IN ABHÄNGIGKEIT VON UNSCHÄRFE-EMPFINDUNG

PRODUCING A CUSTOMIZED SPECTACLE LENS IN ACCORDANCE WITH A BLURRED PERCEPTION

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **14.04.2009 FR 0952436**

(43) Date de publication de la demande:
**22.02.2012 Bulletin 2012/08**

(73) Titulaire: **Essilor International (Compagnie Générale d'Optique)
94220 Charenton-le-Pont (FR)**

(72) Inventeurs:
• **DROBE, Björn**
**F-94220 Charenton-le-Pont (FR)**
• **GIRAUDET, Guillaume**
**F-94220 Charenton-le-Pont (FR)**

(74) Mandataire: **Cabinet Plasseraud
66, rue de la Chaussée d'Antin
75440 Paris Cedex 09 (FR)**

(56) Documents cités:
EP-A- 1 959 294        WO-A-2006/116820
WO-A-2008/031166      WO-A1-2005/019905
WO-A1-2005/091054     US-B1- 6 318 859

EP 2 419 782 B1

**Description**

La présente invention concerne la réalisation d'un verre de lunettes qui est destiné à un porteur identifié, et qui est personnalisé en fonction d'une perception de flou de ce porteur.

De façon connue, une différence entre l'amétropie d'un porteur de lunettes et la correction ophtalmique qui est apportée par un verre de lunettes utilisé par ce porteur produit un brouillage de sa vision, appelé flou («blur» en anglais). Lorsque ce flou résulte d'une défocalisation de l'image en arrière de la rétine, il est spontanément supprimé par une accommodation de l'oeil du porteur, au retard accommodatif («accommodation lag» en anglais) près et tant que la limite d'accommodation oculaire du porteur n'est pas dépassée. Il en résulte cependant une fatigue visuelle pour le porteur. Mais d'une façon générale, en dehors de la faculté d'accommodation oculaire, le flou qui résulte d'une différence entre l'amétropie d'un porteur et la correction ophtalmique d'un verre de lunettes qui est utilisé par celui-ci constitue un défaut de sa vision.

Or certains verres de lunettes qui produisent une correction ophtalmique perfectionnée produisent aussi un flou pour certaines directions de regard obliques, bien que ce flou reste très limité. C'est le cas, notamment, des verres progressifs qui permettent à un porteur presbyte de voir clairement à des distances variables à travers des zones déterminées du verre, mais qui présentent aussi en dehors de ces zones des variations de puissance optique et d'astigmatisme à l'origine de flou visuel pour le porteur. C'est aussi le cas de verres de lunettes unifocaux qui sont adaptés pour corriger simultanément la vision fovéale et la vision périphérique du porteur. De tels verres, progressifs ou à correction fovéale et périphérique, sont alors attribués à un porteur donné en réalisant un compromis entre la correction optique perfectionnée qu'ils apportent pour des directions de regard principales, et un flou qui reste limité pour des directions de regard obliques.

Mais de nombreuses études physiologiques ont montré que la perception du flou visuel est très variable entre des sujets différents. Ainsi, deux porteurs de lunettes qui ont des prescriptions ophtalmiques identiques et qui sont équipés de verres de lunettes aussi identiques peuvent être gênés différemment par le flou qui est produit par ces verres, pour certaines directions obliques de leur regard. Par exemple, un premier porteur peut se déclarer gêné par ce flou alors qu'un second porteur peut confirmer un bon confort visuel. Le compromis qui est réalisé par ces verres identiques entre leur fonction ophtalmique et le flou résiduel qu'ils produisent est alors approprié pour le second porteur, et doit être modifié pour le premier.

Ainsi, un but de la présente invention est de réaliser un verre de lunettes qui est personnalisé en fonction de la perception du flou par le porteur auquel le verre est destiné.

Un autre but de l'invention consiste à tenir compte de la perception du flou par le porteur lorsque le verre de lunettes est réalisé, sans augmenter un nombre de modèles de verres différents qui doivent être disponibles en stock, et qui correspondent à une même prescription ophtalmique.

Le document EP 1 959 294 décrit une méthode pour déterminer quelle partie d'un premier verre de lunettes est utilisée par un futur porteur pour regarder dans différentes directions et a différentes distances, afin d'en déduire le flou d'astigmatisme et de délocalisation dans chaque situation. Un second verre est ensuite conçu, dans lequel les largeurs de champs sont en particulier adaptées au porteur. Mais ce document ne fait pas référence a une valeur-seuil de référence du flou, qui serait «universelle» et qui est adoptée pour définir une largeur de vision nette de référence pour le verre personnalise ;

Le document WO 2006/116820 propose de sélectionner le design d'un verre progressif en fonction des activités principales du futur porteur. Pour cela, un ensemble de verres qui est indexé par deux paramètres de design est initialement fourni pour chaque prescription. Le flou du verre pour chaque direction de regard, dû à la délocalisation, est évoqué. Ce document ne divulgue pas non plus le principe «d'objectiver la largeur de vision nette ; et

Le document WO 2005/091054 concerne l'appariement de deux verres de lunettes, en fonction de leurs valeurs respectives de grossissement et de la résolution de chaque oeil du porteur. Le paramètre du flou n'est pas abordé dans ce document.

Enfin, les documents US 6 318 859 et WO 2005/019905 concernent respectivement l'utilisation d'un ergorama et la distinction de deux valeurs d'astigmatisme prescrites, qui sont différentes en vision de loin et de près. Ils n'ont pas de lien non plus avec l'objet de la revendication 1 de la présente demande de brevet, qui est caractérisé par l'enchaînement des étapes /1/ à /7/.

Pour atteindre les buts mentionnés ci-dessus, l'invention propose un procédé de réalisation d'un verre de lunettes ophtalmiques selon la revendication 1, comprend les étapes suivantes :

/1/ obtenir des caractéristiques d'une série de verres de lunettes qui correspondent à des prescriptions ophtalmiques variables et, pour chaque prescription, à au moins une répartition de valeurs de flou en fonction de valeurs d'un azimut de direction de regard, pour au moins une valeur de référence fixée d'une élévation de la direction de regard ;

/2/ obtenir une valeur-seuil de référence du flou ;

/3/ pour le porteur identifié, obtenir une prescription ophtalmique et au moins une valeur-seuil du flou qui est perçu par ce porteur ;

/4/ dans la série de verres de lunettes utilisée à l'étape /1 /, sélectionner un premier verre qui correspond à la prescription ophtalmique du porteur ;

/5/ pour ce premier verre et pour la valeur de référence d'élévation, déterminer une valeur d'azimut de la direction de regard pour laquelle le premier verre possède la valeur-seuil de référence du flou ;

/6/ sélectionner un second verre qui correspond aussi à la prescription ophtalmique du porteur, et dont la valeur du flou pour la valeur de référence d'élévation et pour la valeur d'azimut déterminée à l'étape /5/, présente un écart égal ou inférieur à 0,50 dioptrie en valeur absolue par rapport à la valeur-seuil du flou perçu obtenue pour le porteur à l'étape /3/ ; et

/7/ réaliser le verre qui est destiné au porteur conformément au second verre sélectionné à l'étape /6/.

Ainsi, des verres de lunettes qui sont réalisés selon l'invention pour des porteurs différents ayant des prescriptions ophtalmiques identiques, présentent des champs de vision nette («sharp vision» en anglais) qui ont des largeurs ajustées chacune pour être ressenties d'une même façon par les porteurs, quelques soient leurs sensibilités respectives au flou. Par conséquent, l'invention introduit la perception du flou comme un paramètre de personnalisation du verre qui est fourni à chaque porteur.

L'invention permet donc de fournir des verres ophtalmiques à des porteurs différents, de façon que tous ces porteurs aient la même impression de bénéficier d'une bande centrale verticale de vision dans laquelle le niveau de flou est acceptable pour chacun d'eux. Cette bande centrale de vision à travers les verres de lunettes, telle qu'elle est perçue par chaque porteur concerné, possède une largeur qui est la même. La subjectivité de la perception du flou par chaque porteur est donc prise en compte, pour réaliser une personnalisation du verre qui lui procure une impression de largeur de bande de vision nette identique aux impressions qui sont ressenties par d'autres porteurs, avec leurs verres respectifs.

Plus précisément, l'étape /5/ d'un procédé selon l'invention consiste à déterminer une largeur de référence pour un champ de vision nette, c'est-à-dire pour un champ de vision dépourvue de flou à travers le verre fourni. Pour cela, on utilise la valeur-seuil de référence du flou de l'étape /2/ comme limite standard d'une quantité de flou acceptable. L'étape /6/ consiste alors à affecter la limite de perception du flou qui est propre au porteur considéré à la largeur de référence du champ de vision nette. Autrement dit, pour chaque verre qui est fourni à un porteur, la valeur-seuil de référence est remplacée, aux limites de la largeur de référence du champ de vision nette, par la valeur-seuil de flou qui est déterminée pour le porteur de ce verre.

L'invention ne concerne donc pas directement la méthode qui est utilisée à l'étape /1/ pour déterminer la répartition des valeurs du flou de chaque verre de la série. Les façons connues de l'Homme du métier avant l'invention, pour calculer le défaut de correction d'un verre, et/ou l'amplitude des aberrations optiques de ce verre, pour chaque direction de regard, peuvent être appliquées de façon équivalente en étant toutes compatibles avec l'invention. Les valeurs de flou qui sont ainsi déterminées pour chaque verre, et pour des directions de regard à travers ce verre, sont des valeurs objectives, c'est-à-dire des valeurs qui sont indépendantes du futur porteur de ce verre, tant que la prescription ophtalmique qui est associée au verre correspond à la vision du porteur.

De même, l'invention ne concerne pas non plus particulièrement la méthode qui est utilisée à l'étape /2/ pour déterminer la valeur-seuil de référence du flou. L'une quelconque des méthodes connues avant la présente invention pour déterminer un niveau maximal moyen du flou qui est généralement accepté ou ne procure pas, en général, de gêne visuelle, peut être utilisée.

Enfin, l'invention ne concerne pas non plus la méthode elle-même qui est utilisée à l'étape /3/ pour déterminer la valeur-seuil du flou qui est propre à chaque porteur. L'invention est compatible de même avec toutes les méthodes connues préalablement pour effectuer une telle détermination individuelle de la valeur-seuil de flou, pour chaque porteur.

L'invention réside donc dans la mise en oeuvre des étapes successives /1/ à /7/, selon l'enchaînement décrit qui permet de procurer à chaque porteur la sensation d'avoir une largeur de champ de vision nette, qui est la même que celle d'un autre porteur.

En outre, le verre de lunettes qui est fourni à chaque porteur, dit «second verre», peut-être sélectionné dans la même série initiale de verres que le premier verre. De cette façon, la personnalisation du verre que procure l'invention, en fonction de la perception du flou propre à chaque porteur, ne nécessite pas de multiplier le nombre de modèles différents de verres à stocker pour une même prescription ophtalmique. Si la série de verres utilisée est, par exemple, une série de verres semi-finis qui correspondent à des designs différents, la personnalisation en fonction du flou qui est perçu par chaque porteur peut être réalisée en modifiant le choix du verre fourni à l'intérieur la même série de verres semi-finis. D'une façon similaire, lorsque le verre fourni est réalisé à partir de designs préalablement optimisés et

3

enregistrés, l'invention peut ne pas nécessiter la conception de nouveaux designs, et le verre qui est fourni peut être sélectionné parmi les designs disponibles, ou calculé simplement à partir de ceux-ci.

Les verres de la série qui est utilisée à l'étape /1/ peuvent être des verres réels, notamment des verres finis, c'est-à-dire à deux faces définitives, ou bien des verres semi-finis, c'est-à-dire à une seule face qui est définitive. Ils peuvent être aussi des verres qui sont définis par des enregistrements de leurs caractéristiques respectives. Dans ce cas, l'invention est mise en oeuvre à partir de ces caractéristiques enregistrées pour chacun des verres de la série. Le verre final est alors réalisé à l'étape /7/ conformément au second verre enregistré qui a été sélectionné à l'étape /6/.

Selon un perfectionnement de l'invention, la personnalisation du verre peut être réalisée en tenant compte de la perception du flou par chaque porteur simultanément pour plusieurs élévations de son regard. Pour cela, les étapes d'un procédé selon l'invention sont complétées de la façon suivante :

- à l'étape /1/ : des répartitions de valeurs du flou en fonction des valeurs d'azimut sont obtenues pour chaque verre de la série et pour plusieurs valeurs de référence fixées pour l'élévation de la direction de regard ;

- à l'étape /3/ : une valeur-seuil du flou qui est perçu par le porteur identifié est obtenue pour chaque valeur de référence d'élévation ;

- l'étape /5/ est répétée avec le même premier verre pour chaque valeur de référence d'élévation, de façon à déterminer une valeur d'azimut qui est associée à chaque valeur de référence d'élévation et pour laquelle le premier verre possède la valeur-seuil de référence du flou pour cette valeur-seuil de référence d'élévation ; et

- l'étape /6/ est réalisée de sorte que le second verre possède des valeurs du flou, pour toutes les valeurs de référence d'élévation utilisées à l'étape /1/ et associées respectivement aux valeurs d'azimut correspondantes déterminées lors des itérations de l'étape /5/, qui présentent chacune un écart inférieur ou égal à 0,50 dioptrie en valeur absolue par rapport à la valeur-seuil du flou perçu obtenue à l'étape /3/ pour le porteur et pour la valeur de référence d'élévation correspondante.

De cette façon, le champ de la vision qui est dépourvue de flou pour chaque porteur à travers le verre qui lui est fourni, présente un profil de largeur qui est perçu d'une façon constante, quelque soit la sensibilité au flou visuel de ce porteur.

Dans la pratique, une même valeur-seuil du flou qui est perçu par le porteur peut être utilisée pour plusieurs valeurs de référence d'élévation, voire pour toutes les valeurs de référence d'élévation qui sont utilisées. Néanmoins, lorsque différentes valeurs de référence d'élévation sont associées à des distances de vision variables à travers les verres, notamment lorsque ces verres sont du type verres progressifs, des valeurs-seuils pour le flou perçu qui sont variables peuvent être corrélées aux variations de la distance de vision.

D'autres particularités et avantages de la présente invention apparaîtront dans la description ci-après d'exemples de mise en oeuvre non limitatifs, en référence aux dessins annexés, dans lesquels :

- la figure 1 illustre un système de repérage de la direction de regard d'un porteur de verre ophtalmique ; et

- la figure 2 est un diagramme qui illustre les répartitions transversales de flou pour des verres différents correspondant à une même prescription ophtalmique.

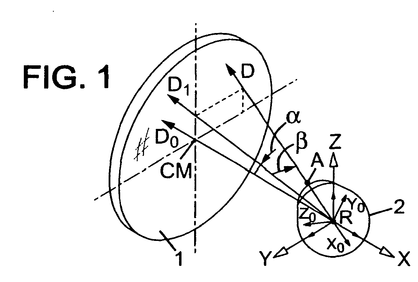

Dans la présente description, et conformément à la figure 1, on repère la direction de regard d'un porteur de verre de lunettes par deux angles, dits d'élévation et d'azimut. Pour cela, une direction de référence $D_0$ est adoptée, qui passe par le centre de rotation R de l'oeil du porteur et par une marque inscrite sur le verre, appelée croix de montage et notée CM. Usuellement, la croix de montage CM est utilisée pour ajuster le verre dans un logement d'une monture de lunettes sélectionnée par le porteur, de sorte que la direction de regard du porteur passe par la croix de montage lorsqu'il regarde droit devant lui. La figure 1 représente le verre de lunettes, qui est référencé 1, en position d'usage par rapport à l'oeil du porteur, référencé 2. Le système d'axes X, Y, Z est lié au verre 1, avec le centre de rotation oculaire R pour origine. Le système d'axes $X_0$, $Y_0$, $Z_0$ est lié à l'oeil, de sorte que la direction de regard du porteur à un instant donné, qui est notée D, est toujours superposée à l'axe $X_0$. Elle passe par le centre de rotation oculaire R et par le sommet («apex» en anglais) du cristallin, noté A. L'élévation («déclination» en anglais) de la direction D est alors l'angle $\alpha$ qui est mesuré dans un plan vertical, le plan X-Z sur la figure, entre la direction de référence $D_0$ et une projection perpendiculaire $D_1$ de la direction de regard D sur le plan X-Z. Par convention, l'élévation $\alpha$ est comptée positivement pour une direction de regard qui est orientée vers le bas, c'est-à-dire en dessous du plan X-Y. L'azimut de la direction de regard D à travers le verre 1 est l'angle $\beta$ entre cette direction D et le plan vertical X-Z, c'est-à-dire entre la direction D et sa projection $D_1$. Par convention, l'azimut $\beta$ est compté positivement lorsque la direction D est tournée vers le côté nasal du verre 1, par rapport au plan vertical X-Z.

Par ailleurs, les caractéristiques optiques des verres de lunettes qui sont données dans la suite ont été obtenues en adoptant pour tous les paramètres de calcul et de mesure nécessaires des valeurs usuellement utilisées par l'Homme du métier. De telles caractéristiques optiques comprennent notamment des valeurs de puissance optique P et d'astigmatisme, et les paramètres qui sont fixés peuvent être des paramètres de port du verre par le porteur, des paramètres physiologiques du porteur, etc. Dans toute la présente description, les caractéristiques optiques qui sont considérées se rapportent à la vision fovéale.

Ainsi un verre de lunettes peut être décrit par la donnée de cartographies de puissance optique et d'astigmatisme. De telles cartographies indiquent des valeurs respectives de la puissance optique et de l'astigmatisme, exprimées en dioptries, pour chaque couple de valeurs de l'élévation $\alpha$ et de l'azimut $\beta$.

Or un verre de lunettes est toujours associé à une prescription ophtalmique, et il est attribué à un porteur identifié lorsque le défaut visuel de ce porteur correspond à la prescription du verre. La prescription du verre comprend une valeur de puissance optique, notée WP, qui est produite pour une direction de référence à travers le verre, par exemple la direction $D_0$. Elle comprend aussi une valeur d'astigmatisme, notée WA. On introduit alors l'astigmatisme résiduel, qui est noté A, et qui est la différence entre la valeur réelle d'astigmatisme du verre de lunettes pour une direction de regard donnée, et la valeur d'astigmatisme prescrite WA. D'une façon générale, les valeurs de la puissance optique P et de l'astigmatisme résiduel A varient entre des directions de regard différentes repérées par l'élévation $\alpha$ et l'azimut $\beta$.

Pour chaque direction de regard D, le verre de lunettes produit par lui-même un flou d'image dont la valeur B peut être calculée selon plusieurs formules alternatives, connues de l'Homme du métier. Par exemple, la valeur du flou B peut être calculée en utilisant la formule suivante :

$$B = \left| WP - P \right| + \left| A \right| / 2^{1/2} . \qquad (1)$$

où |.| désigne la valeur absolue. Ainsi, la valeur de flou B dépend en général de l'élévation $\alpha$ et de l'azimut $\beta$ de la direction de regard D à travers le verre de lunettes.

Lorsque l'accommodation oculaire est suffisante pour compenser le défaut de puissance optique WP - P, la formule précédente peut être réduite à:

$$B = \left| A \right| / 2^{1/2} . \qquad (2)$$

Le verre de lunettes ophtalmiques qui est attribué à un porteur identifié en utilisant l'invention peut être d'un type quelconque. De façon générale, la série de verres de lunettes qui est utilisée dans un procédé selon l'invention comprend au moins un verre pour des prescriptions différentes.

En particulier, ce peut être une série de verres à addition progressive de puissance optique, couramment appelés verres progressifs. Dans ce cas, la prescription ophtalmique qui est associée à chaque verre comprend en outre une valeur d'addition, qui est la différence de puissance optique du verre entre une direction de vision de près et une direction de vision de loin à travers le verre. Les verres de la série correspondent donc à des valeurs variables d'addition, par exemple séparées de 0,25 dioptrie entre deux valeurs d'addition successives. Ils peuvent correspondre en plus à des valeurs variables de courbure moyenne et de cylindre de la face antérieure pour la direction de vision de loin. Eventuellement, ils peuvent encore correspondre à des designs variables pour chaque prescription.

Alternativement, le verre qui est attribué à un porteur selon l'invention peut être un verre unifocal qui réalise à la fois une correction de la vision fovéale du porteur et une correction de sa vision périphérique. Dans ce dernier cas, les verres de la série utilisée pour l'invention sont tous unifocaux et correspondent à des valeurs prescrites différentes de puissance optique et d'astigmatisme. Eventuellement, la série peut comprendre aussi des verres qui correspondent à des corrections périphériques variables pour une même correction fovéale de prescription.

Selon des modes équivalents de mise en oeuvre de l'invention, les verres de lunettes de la série utilisée peuvent être des verres réels, par exemple des verres semi-finis ou finis, ou bien des verres qui sont répertoriés dans un catalogue, par exemple sous forme de fichiers numériques enregistrés dans une bibliothèque et contenant chacun une description d'un verre. Dans ce dernier cas, l'invention peut être mise en oeuvre informatiquement et le verre qui est attribué au porteur est réalisé à partir du résultat du traitement informatique.

On fixe alors au moins une valeur de référence de l'élévation $\alpha$ de la direction de regard D, pour laquelle le verre sera adapté à la perception du flou par le futur porteur. Une répartition transversale des valeurs B du flou qui est produit par chaque verre de la série est alors déterminée pour cette valeur d'élévation, notée $\alpha_0$. Cette répartition est décrite par les variations de la fonction $B(\alpha_0, \beta)$ pour chaque verre, lorsque l'élévation $\alpha$ est constamment égale à la

valeur de référence $\alpha_0$ et l'azimut $\beta$ varie. Lorsque d'autres valeurs supplémentaires d'élévation $\alpha_1$, $\alpha_2$,... sont prises en compte en tant que références additionnelles, autant de répartitions transversales de flou $B(\alpha_1, \beta)$, $B(\alpha_2, \beta)$,... sont obtenues initialement en plus pour chaque verre de la série utilisée.

Selon un premier choix préféré de la valeur de référence d'élévation $\alpha_0$, celle-ci peut être fixée entre 20° et 45°, de préférence entre 26° et 38°, en dessous de la direction de regard D qui passe par la croix de montage CM de chaque verre, correspondant à la direction $D_0$. Une telle valeur pour $\alpha_0$ est particulièrement adaptée pour fournir des verres progressifs à plusieurs porteurs de façon qu'ils aient tous la sensation de bénéficier d'une zone de vision de près ayant une même largeur.

Selon un second choix préféré de la valeur de référence d'élévation $\alpha_0$, celle-ci peut être fixée entre -10° et +2° par rapport à la direction $D_0$. Une telle autre valeur pour $\alpha_0$ est particulièrement adaptée pour fournir des verres progressifs à plusieurs porteurs de façon qu'ils aient tous la sensation de bénéficier d'une zone de vision intermédiaire ou de loin ayant une même largeur. Elle est aussi adaptée pour des verres unifocaux qui corrigent à la fois la vision fovéale et la vision périphérique.

Lorsque plusieurs valeurs de référence sont utilisées simultanément pour l'élévation, une première de ces valeurs, par exemple $\alpha_0$, peut être fixée entre 20° et 45°, de préférence entre 26° et 38°, et une seconde de ces valeurs de référence, $\alpha_1$, peut être fixée entre -10° et +2°.

On fixe en outre une valeur-seuil de référence pour le flou, qui est notée $B_R$ dans la suite. La valeur $B_R$ détermine une limite en deçà de laquelle le flou B peut être estimé comme peu perceptible, ou peu gênant, par une majorité d'individus. Cette limite dépend du critère ou du test d'évaluation de la perception visuelle du flou qui est utilisé. Pour cela, plusieurs tests de perception du flou peuvent être utilisés alternativement, qui sont connus de l'Homme du métier et ne sont donc pas repris en détail ici. La valeur-seuil de référence du flou $B_R$ peut être une moyenne de valeurs-seuils du flou perçu qui sont obtenues respectivement pour des individus d'un échantillon de population. Dans ce cas, le procédé de l'invention peut comprendre en outre une étape préalable d'actualisation de la valeur-seuil de référence du flou $B_R$, sur la base d'un nouvel échantillon de population qui est accru par rapport à un échantillon de population antérieur à partir duquel une valeur-seuil de référence du flou a été établie antérieurement. Alternativement, la valeur-seuil de référence du flou $B_R$ peut être reprise d'études dont les résultats ont été publiés.

Lorsqu'elle est reportée dans la répartition transversale du flou $B(\alpha_0, \beta)$ d'un verre, la valeur-seuil de référence du flou $B_R$ définit, pour la valeur d'élévation $\alpha_0$, la largeur d'une bande dans le verre, à travers laquelle une majorité d'individus correspondant à la prescription de ce verre aurait une impression d'une vision nette. Lorsque plusieurs valeurs de référence d'élévation $\alpha_0$, $\alpha_1$, $\alpha_2$,... sont considérées simultanément, et lorsque la valeur $B_R$ est reportée dans les répartitions transversales du flou $B(\alpha_0, \beta)$, $B(\alpha_1, \beta)$, $B(\alpha_2, \beta)$,..., un profil de largeur d'un canal vertical de vision nette à travers chaque verre est défini, correspondant à une netteté de vision appréciée par une majorité d'individus.

On détermine alors pour le futur porteur du verre, en plus de sa prescription ophtalmique, au moins une valeur-seuil $B_0$ du flou qui est perçu par celui-ci. Lorsque plusieurs valeurs de référence d'élévation sont utilisées, une valeur-seuil du flou qui est perçu par le porteur peut être déterminée pour chacune des valeurs de référence d'élévation. Elles sont désignées par $B_0$, $B_1$, $B_2$,... et sont respectivement associées à $\alpha_0$, $\alpha_1$, $\alpha_2$,... De telles valeurs-seuils du flou perçu par le porteur peuvent être obtenues en effectuant avec celui-ci des tests de perception visuelle identiques à ceux déjà évoqués pour la valeur-seuil de référence $B_R$. Alternativement, chaque valeur-seuil du flou perçu qui est obtenue pour le porteur peut être déduite d'une analyse psychologique qui est réalisée pour celui-ci, et/ou d'une analyse morphologique qui est réalisée à partir de son visage. On pourra se reporter à ce sujet aux articles disponibles qui concernent des relations établies entre certains traits psychologiques d'un individu et sa perception visuelle du flou. En particulier, il est reconnu qu'un individu qui présente les traits psychologiques typiques de l'introversion, notamment le manque de confiance en soi, manifeste également une plus grande tolérance au flou que les individus extravertis. De même, des études de morphopsychologie ont établi une corrélation entre certaines caractéristiques du visage d'un individu et des caractéristiques psychologiques pertinentes de celui-ci.

Dans des mises en oeuvre simplifiées de l'invention, toutes les valeurs-seuils $B_0$, $B_1$, $B_2$,... qui sont associées respectivement aux valeurs de référence d'élévation $\alpha_0$, $\alpha_1$, $\alpha_2$,... pourront être prises égales à une même valeur-seuil du flou qui est perçu par le porteur.

On sélectionne alors un premier verre de lunettes parmi la série, qui correspond à la prescription ophtalmique du porteur. Lorsque la série de verres ne comporte qu'un seul verre pour chaque prescription, ce verre est sélectionné en tant que premier verre, et le verre qui sera finalement attribué au porteur, appelé second verre, sera obtenu en modifiant de façon appropriée le premier verre, comme décrit plus loin.

Lorsque la série de verres de lunettes comporte plusieurs verres pour une même prescription, l'un de ceux-ci est sélectionné en tant que premier verre, éventuellement en utilisant un critère de sélection supplémentaire. Par exemple, une série de verres progressifs peut comprendre, pour chaque prescription ophtalmique, plusieurs designs qui correspondent à des comportements différents de porteurs lorsque chacun de ceux-ci regarde successivement des objets qui sont situés dans des directions différentes. Ces variations de comportement peuvent correspondre notamment à des coordinations variables entre des mouvements de rotation des yeux et des mouvements de rotation de la tête qui sont effectués simultanément par chaque porteur. De telles séries de verres, dont les designs varient en fonction de la coordination des mouvements d'yeux et de tête des porteurs, en plus de leurs prescriptions ophtalmiques, sont bien connues de l'Homme du métier. Dans ce cas, le premier verre peut être sélectionné en fonction de la prescription ophtalmique du porteur et d'un résultat d'une mesure de coordination oeil-tête qui a été effectuée pour lui. L'invention introduit alors un changement dans le verre qui est finalement fourni au porteur, par rapport à la sélection qui résulterait seulement de la prescription ophtalmique et de la détermination de la coordination des mouvements d'yeux et de tête du porteur. En plus de cette coordination des mouvements d'yeux et de tête, le verre fourni tient compte de la sensibilité du porteur au flou. De cette façon, le verre de lunettes qui est fourni à chaque porteur est adapté à la fois à sa coordination des mouvements d'yeux et de tête et à sa perception individuelle du flou.

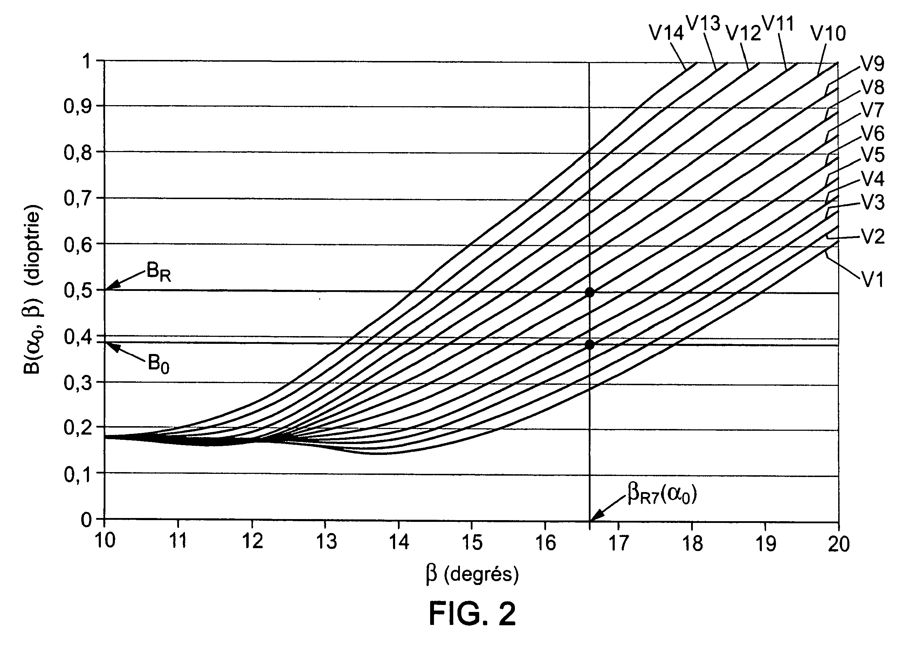

La description en détail de l'invention est poursuivie tout d'abord lorsqu'une seule valeur de référence d'élévation $\alpha_0$ est prise en compte, en référence à la figure 2. Cette figure est un diagramme qui représente les répartitions transversales du flou $B(\alpha_0, \beta)$ de plusieurs verres de la série qui correspondent à la prescription du porteur, par exemple quatorze verres identifiés par $V_1,..., V_{14}$. L'axe horizontal du diagramme repère les valeurs d'azimut $\beta$ exprimées en degrés, et l'axe vertical repère les valeurs du flou de chaque verre de la série, qui sont calculées par exemple selon la formule (1) donnée plus haut. Le premier verre qui est sélectionné peut être le verre $V_7$, par exemple, en prenant en compte la coordination des mouvements d'yeux et de tête du porteur.

On reporte alors sur l'axe vertical du diagramme la valeur-seuil de référence du flou $B_R$, égale à 0,50 dioptrie à titre d'exemple. La courbe de répartition du verre $V_7$ indique alors une valeur d'azimut notée $\beta_{R7}(\alpha_0)$ pour laquelle le flou B du verre $V_7$ est égal à la valeur de référence $B_R$. Sur le diagramme, la valeur d'azimut $\beta_{R7}(\alpha_0)$ est environ égale à 16,6° (degré).

On cherche ensuite dans le diagramme de la figure 2 celui des verres $V_1,..., V_{14}$ qui possède la valeur-seuil $B_0$ du flou perçu par le porteur pour la valeur d'azimut $\beta_{R7}(\alpha_0)$. A titre d'exemple, $B_0$ est supposée égale à 0,39 dioptrie pour le porteur. Le verre $V_4$ est ainsi sélectionné en tant que second verre et attribué au porteur. Bien que ce second verre ne présente qu'un flou B de 0,39 dioptrie pour la valeur d'azimut de 16,6°, il procure à son porteur une largeur subjective du champ de vision nette qui est identique à celle du verre $V_7$ pour un porteur moyen.

Dans cette mise en oeuvre, l'invention introduit une modification de celui des verres $V_1,..., V_{14}$ qui est attribué au porteur, par rapport au premier verre qui a pu être sélectionné en fonction de la coordination des mouvements d'yeux et de tête du porteur. Cette modification permet de tenir compte de la perception du flou qui est propre à chaque porteur. Il s'agit donc d'une utilisation nouvelle de la série initiale de verres de lunettes, qui ne nécessite pas que ces verres soient modifiés.

De façon générale, le second verre qui est sélectionné peut ne pas présenter exactement la valeur de flou $B_0$ pour la valeur d'azimut $\beta_{R7}(\alpha_0)$. Il suffit que le second verre sélectionné présente, pour la valeur d'azimut $\beta_{R7}(\alpha_0)$, un écart qui est inférieur à 0,50 dioptrie en valeur absolue, de préférence inférieur à 0,25 dioptrie, pour que ce second verre soit adapté à la perception du flou par le porteur.

Dans une variante de la mise en oeuvre de l'invention qui vient d'être décrite, la série de verres de lunettes ophtalmiques qui est utilisée peut être un ensemble de verres indexés par au moins un paramètre. Tel est le cas, par exemple, lorsque les verres ont une surface dont la forme est définie par une équation qui comprend au moins un paramètre variable. Les valeurs de ce paramètre peuvent varier de façon discrète ou continue entre deux verres différents de la série, et constituent une indexation de ceux-ci. La sélection d'un verre quelconque de la série consiste alors en la sélection d'une valeur du paramètre d'indexation.

Lorsque la série de verres de lunettes qui est utilisée ne comporte qu'un seul verre pour la prescription ophtalmique du porteur, le second verre ne peut pas être déterminé comme il vient d'être décrit à partir du diagramme de la figure 2. Le second verre qui est finalement attribué au porteur peut être calculé à partir du premier verre $V_7$, par optimisation en imposant comme contrainte que le premier et le second verre ont des prescriptions qui sont identiques, et que le second verre présente la valeur $B_0$ pour le flou B, pour les valeurs respectives $\alpha_0$ et $\beta_{R7}(\alpha_0)$ d'élévation et d'azimut. Le principe d'un tel calcul d'optimisation est usuel, et supposé connu de l'Homme du métier.

La mise en oeuvre d'un perfectionnement de l'invention est maintenant décrite, qui permet de prendre en compte la sensibilité du porteur au flou visuel simultanément pour plusieurs élévations différentes de son regard. Ce perfectionnement est particulièrement adapté pour la réalisation d'un verre progressif personnalisé, puisque la sensibilité du porteur au flou peut varier en fonction de la distance d'observation, c'est-à-dire de l'éloignement des objets qu'il regarde. Dans ce cas, il est particulièrement avantageux qu'au moins une des valeurs de référence d'élévation soit contenue dans un intervalle de valeurs d'élévation qui correspond à une zone de vision de près ou à une zone de vision de loin d'au moins un verre de lunettes de la série utilisée.

Les étapes du procédé qui ont été décrites précédemment pour la valeur de référence d'élévation $\alpha_0$ sont répétées pour d'autres valeurs de référence d'élévation $\alpha_1, \alpha_2,...$ Pour cela, des diagrammes similaires à celui de la figure 2 sont aussi disponibles respectivement pour ces autres valeurs de référence d'élévation. Chaque itération aboutit alors à un verre de la série, qui présente la valeur-seuil du flou perçu par le porteur pour la valeur de référence d'élévation correspondante et pour une valeur de l'azimut $\beta$ ajustée pour ce porteur. Ainsi, un verre désigné par V(0) présente la

valeur-seuil $B_0$ du flou perçu par le porteur pour la valeur de référence d'élévation $\alpha_0$ et la valeur d'azimut $\beta_{RV(0)}(\alpha 0)$, un verre V(1) présente la valeur-seuil $B_1$ du flou perçu par le porteur pour la valeur de référence d'élévation $\alpha_1$ et la valeur d'azimut $\beta_{RV(1)}(\alpha_1)$,... Le second verre V à attribuer au porteur peut alors être déterminé sous la forme d'une combinaison linéaire des verres V(0), V(1),... :

$$V = \frac{1}{n}\sum_{i=0}^{n-1} a_i \cdot V(i)$$

où la combinaison linéaire des verres V(i) peut être une combinaison linéaire de hauteurs sagittales respectives de ceux-ci, correspondant à des valeurs identiques d'élévation $\alpha$ et d'azimut $\beta$, i est un indice de numérotation des valeurs de référence d'élévation qui sont considérées et n est le nombre de ces valeurs de référence d'élévation. $a_i$ sont alors les coefficients de la combinaison linéaire, qui dépendent de l'élévation $\alpha$ et de l'azimut $\beta$. Ils peuvent être déterminés par optimisation de caractéristiques optiques du verre, en ajoutant en outre dans l'optimisation la contrainte selon laquelle le verre optimisé V et chaque verre V(i) ont sensiblement la même valeur du flou B pour l'élévation $\alpha_i$ et l'azimut $\beta_{RV(i)}(\alpha_i)$, à moins de 0,50 dioptrie près.

De façon générale, et comme cela a été décrit plus haut dans un cas particulier en relation avec la figure 2, le second verre peut être sélectionné parmi les verres de la série initiale. Pour cela, cette série doit comprendre plusieurs verres pour chaque prescription, qui correspondent à des répartitions variables des valeurs du flou en fonction de l'azimut, pour chaque valeur de référence de l'élévation.

Alternativement, et comme cela a été illustré après, le second verre peut être sélectionné en effectuant une optimisation numérique à partir du premier verre sélectionné. Dans ce cas, chaque valeur-seuil du flou perçu qui est obtenue pour le porteur peut être introduite dans l'optimisation en tant que valeur-cible de flou pour la valeur de référence d'élévation correspondante et pour la valeur d'azimut qui correspond à cette valeur de référence d'élévation et à la valeur-seuil de référence de flou.

Finalement, le verre qui est destiné au porteur est réalisé conformément au second verre sélectionné. Cette dernière étape peut être exécutée de diverses façons en fonction du mode de mise en oeuvre de l'invention. Par exemple, lorsque la série de verres qui est utilisée est une série de verres semi-finis réels, le verre qui est finalement attribué au porteur est réalisé en usinant une face du second verre semi-fini qui est sélectionné, de façon à produire la prescription ophtalmique du porteur. Alternativement, lorsque les verres de la série sont définis par des fichiers numériques, le verre qui est attribué au porteur peut être obtenu en usinant les deux faces antérieure et postérieure d'une ébauche de verre, conformément au second verre qui a été calculé.

Il est entendu que la présente invention peut être mise en oeuvre en introduisant certaines modifications ou adaptations par rapport à la description qui en a été donnée. En particulier, l'ordre d'exécution de certaines des étapes /1/ à /7/ peut être modifié, sous condition que les données et les résultats de mesure qui sont nécessaires pour exécuter chaque étape soient effectivement disponibles au moment où cette étape est exécutée.

## Revendications

1. Procédé de réalisation d'un verre de lunettes ophtalmiques (1) destiné à un porteur identifié, et personnalisé en fonction d'une perception de flou par ledit porteur, comprenant les étapes suivantes :

/1/ obtenir des caractéristiques d'une série de verres de lunettes ($V_1$,..., $V_{14}$) correspondant à des prescriptions ophtalmiques variables et, pour chaque prescription, à au moins une répartition de valeurs de flou (B) en fonction de valeurs d'un azimut ($\beta$) de direction de regard (D), pour au moins une valeur de référence fixée ($\alpha_0$) d'une élévation ($\alpha$) de la direction de regard ;
/2/ obtenir une valeur-seuil ($B_R$) de référence du flou ;
/3/ pour le porteur identifié, obtenir une prescription ophtalmique et au moins une valeur-seuil ($B_0$) du flou perçu par ledit porteur ;
/4/ dans la série de verres de lunettes utilisée à l'étape /1 /, sélectionner un premier verre ($V_7$) correspondant à la prescription ophtalmique du porteur ;
/5/ pour ledit premier verre ($V_7$) et pour la valeur de référence d'élévation ($\alpha_0$), déterminer une valeur d'azimut ($\beta_{R7}(\alpha_0)$) de la direction de regard pour laquelle le premier verre possède la valeur-seuil ($B_R$) de référence du flou ;
/6/ sélectionner un second verre ($V_4$) correspondant aussi à la prescription ophtalmique du porteur, et dont la valeur du flou pour la valeur de référence d'élévation ($\alpha_0$) et pour la valeur d'azimut ($\beta_{R7}(\alpha_0)$) déterminée à l'étape /5/, présente un écart égal ou inférieur à 0,50 dioptrie en valeur absolue par rapport à la valeur-seuil ($B_0$) du flou perçu obtenue pour le porteur à l'étape /3/ ; et

/7/ réaliser le verre (1) destiné au porteur conformément au second verre ($V_4$) sélectionné à l'étape /6/.

2. Procédé selon la revendication 1, suivant lequel l'écart entre, d'une part la valeur du flou du second verre ($V_4$) sélectionné à l'étape /6/, pour la valeur de référence d'élévation ($\alpha_0$) et pour la valeur d'azimut ($\beta_{R7}(\alpha_0)$) déterminée à l'étape /5/, et d'autre part la valeur-seuil ($B_0$) du flou perçu obtenue pour le porteur à l'étape /3/, est égal ou inférieur à 0,25 dioptrie en valeur absolue.

3. Procédé selon la revendication 1 ou 2, suivant lequel la valeur-seuil de référence ($B_R$) du flou obtenue à l'étape /2/ est une moyenne de valeurs-seuils du flou perçu obtenues respectivement pour des individus d'un échantillon de population.

4. Procédé selon la revendication 3, comprenant en outre une étape préalable d'actualisation de la valeur-seuil de référence ($B_R$) du flou, sur la base d'un nouvel échantillon de population accru par rapport à un échantillon de population antérieur à partir duquel une valeur-seuil de référence du flou a été établie antérieurement.

5. Procédé selon l'une quelconque des revendications précédentes, suivant lequel la valeur du flou pour un verre quelconque, pour un couple de valeurs d'élévation ($\alpha$) et d'azimut ($\beta$) de la direction de regard (D), est calculée selon la formule :

$$B = \left| WP - P \right| + \left| A \right| / 2^{1/2}$$

où: B est la valeur du flou ;
WP est une valeur de puissance optique de la prescription ophtalmique correspondant audit verre et à la valeur d'élévation de la direction de regard ; et
P et A sont des valeurs respectives de puissance optique et d'astigmatisme résiduel dudit verre pour ledit couple de valeurs d'élévation et d'azimut.

6. Procédé selon l'une quelconque des revendications 1 à 5, suivant lequel la valeur de référence d'élévation ($\alpha_0$) est fixée entre 20° et 45°, de préférence entre 26° et 38°, en dessous d'une direction de regard ($D_0$) passant par une croix de montage (CM) de chaque verre.

7. Procédé selon l'une quelconque des revendications 1 à 5, suivant lequel la valeur de référence d'élévation ($\alpha_0$) est fixée entre -10° et +2° par rapport à une direction de regard ($D_0$) passant par une croix de montage (CM) de chaque verre, lesdites valeurs d'élévation étant positives et négatives pour des directions de regard (D) passant en dessous de et au dessus de la croix de montage, respectivement.

8. Procédé selon l'une quelconque des revendications 1 à 5, suivant lequel :

- à l'étape /1/ : des répartitions de valeurs du flou en fonction des valeurs d'azimut sont obtenues pour chaque verre de la série et pour plusieurs valeurs de référence fixées pour l'élévation de la direction de regard ;
- à l'étape /3/ : une valeur-seuil du flou perçu par le porteur identifié est obtenue pour chaque valeur de référence d'élévation ;
- l'étape /5/ est répétée avec le même premier verre pour chaque valeur de référence d'élévation, de façon à déterminer une valeur d'azimut associée à chaque valeur de référence d'élévation et pour laquelle le premier verre possède la valeur-seuil de référence du flou pour ladite valeur-seuil de référence d'élévation ; et
- l'étape /6/ est réalisée de sorte que le second verre possède des valeurs du flou, pour toutes les valeurs de référence d'élévation utilisées à l'étape /1/ et associées respectivement aux valeurs d'azimut correspondantes déterminées lors des itérations de l'étape /5/, qui présentent chacune un écart inférieur ou égal à 0,50 dioptrie en valeur absolue par rapport à la valeur-seuil du flou perçu obtenue à l'étape /3/ pour le porteur et pour la valeur de référence d'élévation correspondante.

9. Procédé selon la revendication 8, suivant lequel une première valeur de référence d'élévation est fixée entre 20° et 45°, de préférence entre 26° et 38°, en dessous d'une direction de regard passant par une croix de montage de chaque verre, et une seconde valeur de référence d'élévation est fixée entre -10° et +2° par rapport à la direction de regard passant par la croix de montage de chaque verre, lesdites valeurs d'élévation étant positives et négatives pour des directions de regard passant en dessous de et au dessus de la croix de montage, respectivement.

**10.** Procédé selon l'une quelconque des revendications 1 à 9, suivant lequel les verres de la série utilisée à l'étape /1/ sont progressifs, et éventuellement correspondent en outre à des designs variables pour chaque prescription.

**11.** Procédé selon la revendication 10, suivant lequel au moins une valeur de référence d'élévation utilisée à l'étape /1/ est contenue dans un intervalle de valeurs d'élévation correspondant à une zone de vision de près ou à une zone de vision de loin d'au moins un verre de la série utilisée à ladite étape /1 /.

**12.** Procédé selon l'une quelconque des revendications 1 à 9, suivant lequel les verres de la série utilisée à l'étape /1/ sont unifocaux, et éventuellement correspondent en outre à des corrections périphériques variables pour une même correction fovéale de prescription.

**13.** Procédé selon l'une quelconque des revendications 1 à 12, suivant lequel la série de verres de lunettes utilisée à l'étape /1/ comprend pour chaque prescription plusieurs verres correspondant à des répartitions variables des valeurs du flou (B) en fonction des valeurs de l'azimut ($\beta$) de la direction de regard (D), pour chaque valeur de référence de l'élévation ($\alpha$) de ladite direction de regard ;
et suivant lequel le second verre est sélectionné à l'étape /6/ dans ladite série de verres de lunettes.

**14.** Procédé selon l'une quelconque des revendications 1 à 12, suivant lequel le second verre est sélectionné à l'étape /6/ en effectuant une optimisation numérique à partir du premier verre sélectionné à l'étape /4/, et en introduisant dans ladite optimisation chaque valeur-seuil du flou perçu obtenue pour le porteur lors d'une exécution de l'étape /3/ en tant que valeur-cible du flou pour la valeur de référence d'élévation correspondante et pour la valeur d'azimut correspondante déterminée lors d'une exécution de l'étape /5/.

**15.** Procédé selon l'une quelconque des revendications précédentes, suivant lequel le premier verre est sélectionné à l'étape /4/ en fonction de la prescription ophtalmique du porteur et d'un résultat d'une mesure de coordination oeil-tête effectuée pour ledit porteur.

**16.** Procédé selon l'une quelconque des revendications précédentes, suivant lequel chaque valeur-seuil du flou perçu obtenue pour le porteur à l'étape /3/ est déduite d'une analyse psychologique réalisée pour ledit porteur, et/ou d'une analyse morphologique réalisée à partir du visage dudit porteur.

**Patentansprüche**

**1.** Verfahren zur Herstellung eines ophthalmischen Brillenglases (1), das für einen identifizierten Träger bestimmt ist und in Abhängigkeit von einer Unschärfewahrnehmung durch den Träger personalisiert ist, das die folgenden Schritte aufweist:

/1/ Erhalten der Eigenschaften von einer Reihe von Brillengläsern ($V_1$, ... , $V_{14}$) , die variablen ophthalmischen Verschreibungen und für jede Verschreibung mindestens einer Verteilung von Unschärfewerten (B) in Abhängigkeit von Werten eines Azimuts ($\beta$) einer Blickrichtung (D) für mindestens einen festgelegten Referenzwert ($\alpha_0$) einer Elevation ($\alpha$) der Blickrichtung entsprechen;
/2/ Erhalten eines Referenzschwellenwertes ($B_R$) der Unschärfe;
/3/ Erhalten einer ophthalmischen Verschreibung für den identifizierten Träger und mindestens eines Schwellenwertes ($B_0$) der von dem Träger wahrgenommenen Unschärfe;
/4/ Wählen eines ersten Glases ($V_7$) aus der in Schritt /1/ verwendeten Reihe von Brillengläsern, das der ophthalmischen Verschreibung des Trägers entspricht;
/5/ Bestimmen für das erste Glas ($V_7$) und für den Elevationsreferenzwert ($\alpha_0$) eines Azimutwertes ($\beta_{R7}(\alpha_0)$) der Blickrichtung, für den das erste Glas den Referenzschwellenwert ($B_R$) der Unschärfe aufweist;
/6/ Wählen eines zweiten Glases ($V_4$), das auch der ophthalmischen Verschreibung des Trägers entspricht, und dessen Unschärfewert für den Elevationsreferenzwert ($\alpha_0$) und für den Azimutwert ($\beta_{R7}(\alpha_0)$), der in Schritt /5/ bestimmt wird, einen Abstand von gleich oder weniger als 0,50 Dioptrien dem Absolutwert nach in Bezug auf den Schwellenwert ($B_0$) der wahrgenommenen Unschärfe, der für den Träger in Schritt /3/ erhalten wird, aufweist; und
/7/ Herstellen des Glases (1), das für den Träger bestimmt ist, in Übereinstimmung mit dem in Schritt /6/ gewählten zweiten Glas ($V_4$).

**2.** Verfahren nach Anspruch 1, wobei der Abstand zwischen einerseits dem Unschärfewert des in Schritt /6/ gewählten

zweiten Glases ($V_4$) für den Elevationsreferenzwert ($\alpha_0$) und für den Azimutwert ($\beta_{R7}(\alpha_0)$), der in Schritt /5/ bestimmt wird, und andererseits dem Schwellenwert ($B_0$) der wahrgenommenen Unschärfe, der für den Träger in Schritt /3/ erhalten wird, gleich oder weniger als 0,25 Dioptrien dem Absolutwert nach beträgt.

3. Verfahren nach dem Anspruch 1 oder 2, wobei der Referenzschwellenwert ($B_R$) der Unschärfe, der in Schritt /2/ erhalten wird, ein Durchschnitt von Schwellenwerten der wahrgenommenen Unschärfe ist, die jeweils für Personen einer Bevölkerungsstichprobe erhalten werden.

4. Verfahren nach dem Anspruch 3, ferner umfassend einen vorausgehenden Schritt der Aktualisierung des Referenzschwellenwertes ($B_R$) der Unschärfe auf der Grundlage einer neuen Bevölkerungsstichprobe, die gegenüber der vorherigen Bevölkerungsstichprobe erweitert wird, von der aus ein Referenzschwellenwert der Unschärfe zuvor erstellt worden ist.

5. Verfahren nach einem der vorhergehenden Ansprüche, wobei der Unschärfewert für ein beliebiges Glas für ein Paar von Elevationswerten ($\alpha$) und Azimutwerten ($\beta$) der Blickrichtung (D) nach der folgenden Formel berechnet wird:

$$B= \bigl| WP - P \bigr| + \bigl| A \bigr| / 2^{1/2}$$

wo: B der Unschärfewert ist;
WP ein Wert der optischen Sichtleistung der ophthalmischen Verschreibung ist, der dem Glas und dem Elevationswert der Blickrichtung entspricht; und
P und A jeweilige Werte der optischen Sichtleistung und des Restastigmatismus des Glases für das Paar von Elevations- und Azimutwerten sind.

6. Verfahren nach einem der Ansprüche 1 bis 5, wobei der Elevationsreferenzwert ($\alpha_0$) auf den Bereich von 20° bis 45°, vorzugsweise von 26° bis 38°, unter einer Blickrichtung ($D_0$), die durch ein Montagekreuz (CM) jedes Glases läuft, festgelegt wird.

7. Verfahren nach einem der Ansprüche 1 bis 5, wobei der Elevationsreferenzwert ($\alpha_0$) auf den Bereich von -10° bis +2° in Bezug auf eine Blickrichtung ($D_0$), die durch ein Montagekreuz (CM) jedes Glases läuft, festgelegt wird, wobei die Elevationswerte für Blickrichtungen (D), die unterhalb bzw. oberhalb des Montagekreuzes laufen, positiv bzw. negativ sind.

8. Verfahren nach einem der Ansprüche 1 bis 5, wobei:

- in Schritt /1/: Verteilungen von Unschärfewerten in Abhängigkeit von Azimutwerten für jedes Glas der Reihe und für mehrere Referenzwerte, die für die Elevation der Blickrichtung festgelegt werden, erhalten werden;
- in Schritt /3/: ein Schwellenwert der von dem identifizierten Träger wahrgenommenen Unschärfe für jeden Elevationsreferenzwert erhalten wird;
- der Schritt /5/ mit dem ersten Glas für jeden Elevationsreferenzwert wiederholt wird, um einen Azimutwert zu bestimmen, der mit jedem Elevationsreferenzwert verbunden ist, und für den das erste Glas den Referenzschwellenwert der Unschärfe für den Elevationsreferenzschwellenwert aufweist; und
- der Schritt /6/ derart durchgeführt wird, dass das zweite Glas Unschärfewerte für alle Elevationsreferenzwerte aufweist, die in Schritt /1/ verwendet werden und jeweils mit den entsprechenden Azimutwerten verbunden werden, die während der Iterationen des Schrittes /5/ bestimmt werden, die jeweils einen Abstand von weniger als oder gleich 0,50 Dioptrien dem Absolutwert nach in Bezug auf den Schwellenwert der wahrgenommenen Unschärfe aufweisen, der in Schritt /3/ für den Träger und für den entsprechenden Elevationsreferenzwert erhalten wird.

9. Verfahren nach Anspruch 8, wobei ein erster Elevationsreferenzwert auf den Bereich von 20° bis 45°, vorzugsweise von 26° bis 38°, unter einer Blickrichtung, die durch ein Montagekreuz jedes Glases läuft, festgelegt wird, und ein zweiter Elevationsreferenzwert auf den Bereich von -10° bis +2° in Bezug auf die Blickrichtung, die durch das Montagekreuz jedes Glases läuft, festgelegt wird, wobei die Elevationswerte für Blickrichtungen, die unterhalb bzw. oberhalb des Montagekreuzes laufen, positiv bzw. negativ sind.

10. Verfahren nach einem der Ansprüche 1 bis 9, wobei die Gläser der Reihe, die in Schritt /1/ verwendet wird, progressiv sind und eventuell ferner Designs entsprechen, die für jede Verschreibung variabel sind.

11. Verfahren nach Anspruch 10, wobei mindestens ein Elevationsreferenzwert, der in Schritt /1/ verwendet wird, in einem Intervall von Elevationswerten enthalten ist, das einem Nahsichtbereich oder einem Fernsichtbereich von mindestens einem Glas der Reihe, die in Schritt /1/ verwendet wird, entspricht.

12. Verfahren nach einem der Ansprüche 1 bis 9, wobei die Gläser der Reihe, die in Schritt /1/ verwendet wird, Einstärkengläser sind und eventuell ferner peripheren Korrekturen entsprechen, die für eine gleiche foveale Korrektur einer Verschreibung variabel sind.

13. Verfahren nach einem der Ansprüche 1 bis 12, wobei die Reihe von Brillengläsern, die in Schritt /1/ verwendet wird, für jede Verschreibung mehrere Gläser aufweist, die variablen Verteilungen der Unschärfewerte (B) in Abhängigkeit von Azimutwerten ($\beta$) der Blickrichtung (D) für jeden Elevationsreferenzwert ($\alpha$) der Blickrichtung entsprechen; und wobei das zweite Glas in Schritt /6/ aus der Reihe von Brillengläsern gewählt wird.

14. Verfahren nach einem der Ansprüche 1 bis 12, wobei das zweite Glas in Schritt /6/ gewählt wird, indem eine digitale Optimierung ausgehend von dem ersten Glas, das in Schritt /4/ gewählt wird, ausgeführt wird, und indem in die Optimierung jeder Schwellenwert der wahrgenommenen Unschärfe, der für den Träger während einer Ausführung des Schrittes /3/ erhalten wird, als Zielwert der Unschärfe für den entsprechenden Elevationsreferenzwert und für den entsprechenden Azimutwert, der während einer Ausführung des Schrittes /5/ erhalten wird, eingeführt wird.

15. Verfahren nach einem der vorhergehenden Ansprüche, wobei das erste Glas in Schritt /4/ in Abhängigkeit von der ophthalmischen Verschreibung des Trägers und von einem Ergebnis einer Messung der Auge-Kopf-Koordination, die für den Träger durchgeführt wird, gewählt wird.

16. Verfahren nach einem der vorhergehenden Ansprüche, wobei jeder Schwellenwert der wahrgenommenen Unschärfe, der für den Träger in Schritt /3/ erhalten wird, aus einer psychologischen Analyse, die für den Träger durchgeführt wird, und/oder aus einer morphologischen Analyse, die ausgehend von dem Gesicht des Trägers durchgeführt wird, abgeleitet wird.

**Claims**

1. Method for producing an ophthalmic spectacle lens (1) intended for an identified wearer, and customized as a function of a perception of blur by said wearer, comprising the following steps:

/1/ obtaining characteristics of a series of spectacle lenses ($V_1$,..., $V_{14}$) corresponding to variable ophthalmic prescriptions and, for each prescription, to at least one distribution of blur values (B) as a function of values of an azimuth ($\beta$) of direction of gaze (D), for at least one fixed reference value ($\alpha_0$) of an elevation ($\alpha$) of the direction of gaze;

/2/ obtaining a reference threshold value ($B_R$) of the blur;

/3/ for the identified wearer, obtaining an ophthalmic prescription and at least one threshold value ($B_0$) of the blur perceived by said wearer;

/4/ from the series of spectacle lenses used in step /1/, selecting a first lens ($V_7$) corresponding to the wearer's ophthalmic prescription;

/5/ for said first lens ($V_7$) and for the elevation reference value ($\alpha_0$), determining an azimuth value ($\beta_{R7}(\alpha_0)$) of the direction of gaze for which the first lens possesses the reference threshold value ($B_R$) of the blur;

/6/ selecting a second lens ($V_4$) corresponding also to the wearer's ophthalmic prescription, and the value of whose blur for the elevation reference value ($\alpha_0$) and for the azimuth value ($\beta_{R7}(\alpha_0)$) determined in step /5/ exhibits a discrepancy of equal to or less than 0.50 diopters in absolute value with respect to the perceived-blur threshold value ($B_0$) obtained for the wearer in step /3/; and

/7/ producing the lens (1) intended for the wearer in accordance with the second lens ($V_4$) selected in step /6/.

2. Method according to Claim 1, according to which the discrepancy between, on the one hand the value of the blur of the second lens ($V_4$) selected in step /6/, for the elevation reference value ($\alpha_0$) and for the azimuth value ($\beta_{R7}(\alpha_0)$) determined in step /5/, and on the other hand the perceived-blur threshold value ($B_0$) obtained for the wearer in step /3/, is equal to or less than 0.25 diopters in absolute value.

**3.** Method according to Claim 1 or 2, according to which the blur reference threshold value ($B_R$) obtained in step /2/ is an average of perceived-blur threshold values which are obtained respectively for individuals of a population sample.

**4.** Method according to Claim 3, furthermore comprising a prior step of updating the reference threshold value ($B_R$) of the blur, on the basis of a new population sample increased with respect to an earlier population sample on the basis of which a reference threshold value of the blur has been previously established.

**5.** Method according to any one of the preceding claims, according to which the value of the blur for an arbitrary lens, for a pair of values of elevation ($\alpha$) and of azimuth ($\beta$) of the direction of gaze (D), is calculated according to the formula:

$$B = |WP - P| + |A|/2^{1/2}$$

where: B is the value of the blur;
WP is an optical power value of the ophthalmic prescription corresponding to said lens and to the value of elevation of the direction of gaze; and
P and A are respective values of optical power and of residual astigmatism of said lens for said pair of elevation and azimuth values.

**6.** Method according to any one of Claims 1 to 5, according to which the elevation reference value ($\alpha_0$) is fixed between 20° and 45°, preferably between 26° and 38°, below a direction of gaze (Do) passing through a fitting cross (FC) of each lens.

**7.** Method according to any one of Claims 1 to 5, according to which the elevation reference value ($\alpha_0$) is fixed between -10° and +2° with respect to a direction of gaze ($D_0$) passing through a fitting cross (FC) of each lens, said elevation values being positive and negative for directions of gaze (D) passing below and above the fitting cross, respectively.

**8.** Method according to any one of Claims 1 to 5, according to which:

- in step /1/: distributions of values of the blur as a function of the azimuth values are obtained for each lens of the series and for several fixed reference values for the elevation of the direction of gaze;
- in step /3/: a threshold value of the blur perceived by the identified wearer is obtained for each elevation reference value;
- step /5/ is repeated with the same first lens for each elevation reference value, so as to determine an azimuth value associated with each elevation reference value and for which the first lens possesses the reference threshold value of the blur for said elevation reference threshold value; and
- step /6/ is carried out so that the second lens possesses values of the blur, for all the elevation reference values used in step /1/ and associated respectively with the corresponding azimuth values determined during the iterations of step /5/, which each exhibit a discrepancy of less than or equal to 0.50 diopters in absolute value with respect to the perceived-blur threshold value obtained in step /3/ for the wearer and for the corresponding elevation reference value.

**9.** Method according to Claim 8, according to which a first elevation reference value is fixed between 20° and 45°, preferably between 26° and 38°, below a direction of gaze passing through a fitting cross of each lens, and a second elevation reference value is fixed between -10° and +2° with respect to the direction of gaze passing through the fitting cross of each lens, said elevation values being positive and negative for directions of gaze passing below and above the fitting cross, respectively.

**10.** Method according to any one of Claims 1 to 9, according to which the lenses of the series used in step /1/ are progressive, and optionally correspond furthermore to variable designs for each prescription.

**11.** Method according to Claim 10, according to which at least one elevation reference value used in step /1/ is contained in an interval of elevation values corresponding to a near vision zone or to a far vision zone of at least one lens of the series used in said step /1/.

**12.** Method according to any one of Claims 1 to 9, according to which the lenses of the series used in step /1/ are monofocal, and optionally correspond furthermore to variable peripheral corrections for one and the same foveal correction of a prescription.

13. Method according to any one of Claims 1 to 12, according to which the series of spectacle lenses used in step /1/ comprises for each prescription several lenses corresponding to variable distributions of the values of the blur (B) as a function of the values of the azimuth ($\beta$) of the direction of gaze (D), for each reference value of the elevation ($\alpha$) of said direction of gaze;
and according to which the second lens is selected in step /6/ from said series of spectacle lenses.

14. Method according to any one of Claims 1 to 12, according to which the second lens is selected in step /6/ by performing a numerical optimization on the basis of the first lens selected in step /4/, and by introducing into said optimization each perceived-blur threshold value obtained for the wearer during an execution of step /3/ in the guise of target value of the blur for the corresponding elevation reference value and for the corresponding azimuth value determined during an execution of step /5/.

15. Method according to any one of the preceding claims, according to which the first lens is selected in step /4/ as a function of the wearer's ophthalmic prescription and of a result of an eye-head coordination measurement performed for said wearer.

16. Method according to any one of the preceding claims, according to which each perceived-blur threshold value obtained for the wearer in step /3/ is deduced from a psychological analysis carried out for said wearer, and/or from a morphological analysis carried out with the aid of said wearer's face.

FIG. 1

FIG. 2

EP 2 419 782 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1959294 A
- WO 2006116820 A
- WO 2005091054 A
- US 6318859 B
- WO 2005019905 A